# EUROPÄISCHE PATENTSCHRIFT

(11) **EP 3 339 712 B1**
(45) Veröffentlichungstag und Bekanntmachung des Hinweises auf die Patenterteilung: **17.07.2019**
(21) Anmeldenummer: 17205409.0
(22) Anmeldetag: 05.12.2017
(51) Int. Cl.: F16L 55/035, E03C 1/02

(54) **MONTAGESYSTEM ZUR BEFESTIGUNG EINES WANDWINKELS EINER FLUIDFÜHRENDEN INSTALLATION AN EINER WAND**
MOUNTING SYSTEM FOR ATTACHING A WALL ANGLE OF A FLUID-CONVEYING INSTALLATION ON A WALL
SYSTÈME DE FIXATION PERMETTANT DE FIXER UNE ÉQUERRE MURALE D'UNE INSTALLATION CONDUISANT UN FLUIDE SUR UN MUR

(30) Priorität: 22.12.2016 DE 202016107269 U
(43) Veröffentlichungstag der Anmeldung: 27.06.2018
(73) Patentinhaber: REHAU AG + Co, 95111 Rehau (DE)
(72) Erfinder: Minier, Marilyne, 96052 Bamberg (DE)

(56) Entgegenhaltungen:
- EP-A1- 0 660 019
- EP-A1- 0 908 566
- DE-C1- 4 406 574
- DE-U1-202010 016 881

## Beschreibung

Die vorliegende Erfindung betrifft ein Montagesystem zur Befestigung eines Wandwinkels einer fluidführenden Installation an einer Wand, das eine Wandhalterung, die erste Bohrungen zur Aufnahme von Befestigungselementen aufweist und weiter Aufnahmelöcher zur Vorfixierung des Dämmelements an Wandhalterung aufweist; einen Wandwinkel, der Durchgangsbohrungen zur Durchführung der Befestigungselemente aufweist; ein Dämmelement zur Anordnung zwischen der Wandhalterung und dem Wandwinkel, wobei das Dämmelement mindestens ein Einsteckelement zur steckenden Vorfixierung an der Wandhalterung aufweist; und Befestigungselemente zur Befestigung des Wandwinkels an der Wandhalterung; umfasst.

Derartige Montagesysteme zur Befestigung eines Wandwinkels einer fluidführenden Installation an einer Wand sind aus dem Stand der Technik durch offenkundige Vorbenutzung sowie aus der EP 0 660 019 A1 und der DE 20 2010 016 881 U1 bekannt. Ein weiteres Montagesystem für die Hausinstallation ist beispielsweise in der EP 0 908 566 A1 beschrieben. Die Montagesysteme dienen bei Wasserinstallationen insbesondere dazu, Bauteile, wie Fittings, Gelenke und dergleichen, an einer Wand zu befestigen. Die Befestigung der Wandwinkel auf der Wandhalterung erfolgt in der Regel durch Befestigungselemente wie Schrauben. Zur Schallentkopplung dienen Dämmelemente, die zwischen dem Wandwinkel und der Wandhalterung sowie zwischen den Befestigungselementen und der Wandhalterung eingebracht werden. Am Markt sind derartige Montagesysteme, bei denen die anderen Komponenten der Wandhalterung lose beigelegt sind oder als separate Artikel von den Installationssystemherstellern angeboten werden. Für den Installateur auf der Baustelle hat dies jedoch den Nachteil, dass die einzelnen Komponenten vor Ort auf der Baustelle zusammengebaut werden müssen. Neben einem hohen Zeitaufwand für die Montage ist vor allem die Handhabung von einer Vielzahl an losen Komponenten unpraktisch für den Installateur. Darüber hinaus besteht die Gefahr, dass Einzelteile herunterfallen oder während des Transports oder insbesondere bei Kleinteilen bei der Installation verloren gehen.

Dementsprechend liegt der vorliegenden Erfindung die Aufgabe zugrunde, ein Montagesystem zur Befestigung eines Wandwinkels einer fluidführenden Installation an einer Wand zur Verfügung zu stellen, das die Nachteile des Stands der Technik überwindet. Insbesondere soll bei dem erfindungsgemäßen Montagesystem die Gefahr, dass einzelne Komponenten verloren gehen reduziert sein. Darüber hinaus soll der Installateur die Montage unkompliziert vornehmen können.

Diese und andere Aufgaben werden erfindungsgemäß durch ein Montagesystem mit den Merkmalen des Anspruchs 1 gelöst. Bevorzugte Ausführungsformen der vorliegenden Erfindung sind in den abhängigen Ansprüchen beschrieben.

Erfindungsgemäß wurde erkannt, dass das Verlorengehen einzelner Komponenten, insbesondere des Dämmelements, des erfindungsgemäßen Montagesystems dadurch verhindert werden kann, dass das Dämmelement an der Wandhalterung vorfixiert ist. Erfindungsgemäß wird dies dadurch realisiert, dass das Dämmelement an seiner der Wandhalterung zugewandten Seite ein Einsteckelement aufweist. Das Einsteckelement ist klemmend in eines der Aufnahmelöcher in der Wandhalterung eingesetzt und wird so ausgeliefert. Auf der Baustelle befestigt der Installateur die Wandhalterung an der Wand, das Dämmelement befindet sich unmittelbar an der richtigen Stelle an der Wandhalterung, so dass der Installateur nur noch den Wandwinkel aufsetzen und diesen an der Wandhalterung befestigen muss. Ein langwieriges Suchen der einzelnen Komponenten entfällt durch das erfindungsgemäße Montagesystem. Dadurch ist die Montage eines Wandwinkels über einen Wandwinkel an der Wand erheblich vereinfacht. Weiter sind die Befestigungselemente erfindungsgemäß im Auslieferungszustand des Montagesystems mit dem Dämmelement verbunden sind. Damit hat der Installateur bei der Montage des erfindungsgemäßen Montagesystems die Befestigungselemente am Dämmelement erreichbar, wodurch die Montage noch stärker erleichtert wird. Darüber hinaus gehen die Befestigungselemente nicht so leicht verloren. Insbesondere sind die Befestigungselemente durch Kraftschluss mit Abschnitten des Dämmelements verbunden, die sich leicht vom Dämmelement abtrennen, insbesondere losreißen, lassen. Dadurch bleiben bei der Wandwinkelbefestigung die abgetrennten Abschnitte des Dämmelements an dem jeweiligen Befestigungselement vorhanden, so dass die Dämmeigenschaften auch zwischen den Befestigungselementen und dem Wandwinkel wirken.

Dementsprechend liegt die vorliegende Erfindung in der Bereitstellung eines Montagesystems zur Befestigung eines Wandwinkels einer fluidführenden Installation an einer Wand, das eine Wandhalterung, die erste Bohrungen zur Aufnahme von Befestigungselementen aufweist, wobei die Wandhalterung weiter Aufnahmelöcher zur Vorfixierung des Dämmelements an der Wandhalterung aufweist; mindestens einen Wandwinkel, der Durchgangsbohrungen zur Durchführung der Befestigungselemente aufweist; mindestens ein Dämmelement zur Anordnung zwischen der Wandhalterung und dem Wandwinkel, wobei das Dämmelement mindestens ein Einsteckelement zur steckenden Vorfixierung an der Wandhalterung aufweist; und Befestigungselemente zur Befestigung der Wandhalterung an dem Wandwinkel; umfasst, wobei erfindungsgemäß die Befestigungselemente im Auslieferungszustand des Montagesystems mit dem Dämmelement verbunden sind, wobei die Befestigungselemente unter Abtrennung eines Abschnitts des Dämmelements vom Dämmelement abtrennbar sind.

Das Einsteckelement ist bevorzugt als Ausstülpung auf einer Seite des Dämmelements ausgebildet, wobei insbesondere eine pilzkopfförmige Ausstülpung mit Rückhaltelippe bevorzugt ist. Eine derartige Ausstülpung lässt sich besonders gut in den Aufnahmelöcher des Dämmelements verklemmen und trägt so zu einer guten Handhabbarkeit des erfindungsgemäßen Montagesystems bei.

In bevorzugten Ausführungsformen des erfindungsgemäßen Montagesystems ist die steckende Vorfixierung des Dämmelements an der Wandhalterung reversibel ausgestaltet. Dadurch kann das Dämmelement im Bedarfsfall in unterschiedliche Aufnahmelöcher der Wandhalterung eingesetzt werden. Alternativ oder zusätzlich dazu kann es von Vorteil sein, wenn das Dämmelement mittels des Klemmelements in der Wandhalterung drehbar ist. Auf diese Weise ist eine Montage eines Wandwinkels in verschiedener Orientierung relativ zu einem Aufnahmeloch möglich.

Als Materialien des Dämmelements bzw. der Dämmelemente sind thermoplastische Elastomere, insbesondere thermoplastische Elastomere auf Basis von Weich-PVC, PP/EPDM, EPDM sowie TPS, SBS und ASA (Acrylnitril-Styrol-Acrylester-Terpolymer), Elastomere wie Gummi oder Kautschuk, sowie Polyurethane, insbesondere geschäumte Polyurethane bevorzugt. Die Materialien des Dämmelements bzw. der Dämmelemente verfügen bevorzugt über eine Shore-Härte im Bereich von 50 Shore A bis 80 Shore A. Dabei sind elastisch verformbare Materialien mit einer Shore-Härte (Shore A) im Bereich von 60 Shore A bis 78 Shore A und insbesondere im Bereich von 65 Shore A bis 75 Shore A bevorzugt. Ein ganz besonders bevorzugtes Material besitzt eine Härte von etwa 70 Shore A (insbesondere im Bereich von 68 Shore A bis 72 Shore A). Die angegeben Werte der Shore-Härte beziehen sich dabei auf die Normen DIN ISO 7619, DIN 53505 und DIN 7868.

Das erfindungsgemäße Montagesystem sowie einzelne Bestandteile davon können auch zeilenweise oder schichtweise unter Verwendung eines zeilenaufbauenden oder schichtaufbauenden Fertigungsverfahrens (z. B. 3D-Druck) hergestellt werden.

Die vorliegende Erfindung wird im Folgenden unter Bezugnahme auf bevorzugte Ausführungsformen des erfindungsgemäßen Montagesystem im Detail erläutert, wobei die beigefügten Zeichnungen die Erfindung leichter verständlich machen sollen. Dabei versteht es sich, dass die dargestellte Ausführungsform die vorliegende Erfindung exemplarisch veranschaulichen und nicht einschränken soll. Es zeigen:
- Figur 1: eine perspektivische Darstellung eines Montagesystem zur Befestigung eines Wandwinkels gemäß einer Ausführungsform der vorliegenden Erfindung;
- Figur 2: eine perspektivische Darstellung der Wandhalterung gemäß der in Fig. 1 gezeigten Ausführungsform des erfindungsgemäßen Montagesystems;
- Figur 3: eine perspektivische Rückseitendarstellung eines Dämmelements gemäß der in Fig. 1 gezeigten Ausführungsform des erfindungsgemäßen Montagesystems; und
- Figur 4: eine vergrößerte Darstellung eines rückseitigen Ausschnitts der Wandhalterung gemäß der in Fig. 1 gezeigten Ausführungsform des erfindungsgemäßen Montagesystems mit eingesetztem Dämmeleement.

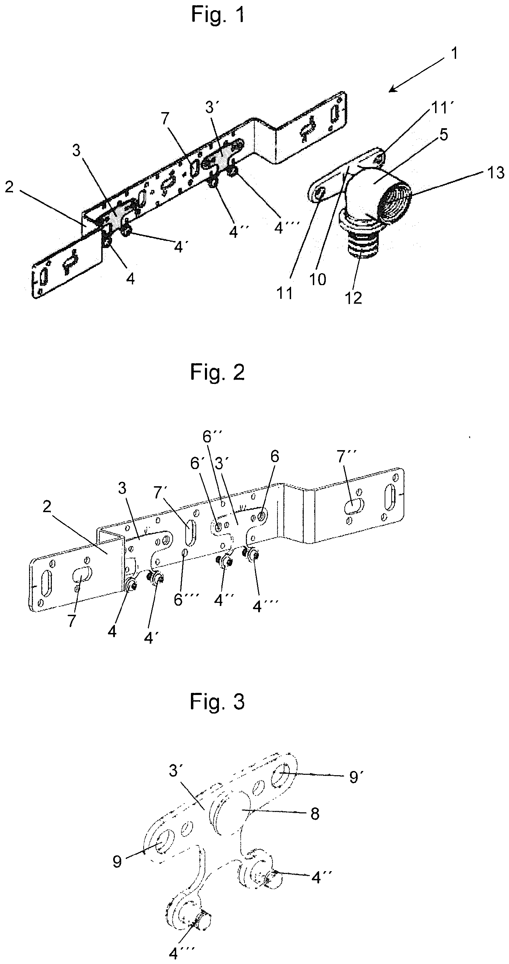

In Figur 1 ist eine Ausführungsform des erfindungsgemäßen Montagesystems 1 zur Befestigung eines Wandwinkels einer fluidführenden Installation, beispielsweise eines Hausinstallationssystems oder eines Fußbodenheizungssystems, an einer Wand in einer perspektivischen Darstellung gezeigt. Das erfindungsgemäße Montagesystem 1 umfasst eine Wandhalterung 2; zwei Dämmelemente 3, 3' mit jeweils zwei als Schrauben ausgebildeten Befestigungselementen 4, 4', 4", 4'" sowie einen Wandwinkel 5.

Figur 2 zeigt eine perspektivische Darstellung der Wandhalterung 2 des in Fig. 1 dargestellten erfindungsgemäßen Montagesystems 1 mit den beiden Dämmelementen 3, 3'. In der dargestellten Ausführungsform handelt es sich bei der Wandhalterung 2 um ein längliches, gebogenes Metallblech. Die Wandhalterung 2 weist eine Vielzahl von ersten Bohrungen 6', 6", 6'", 6"", 6""'. Die ersten Bohrungen 6, 6', 6", 6"', 6"", 6""' sind vorzugsweise als Gewindebohrungen ausgebildet. Damit können als Schrauben ausgebildete Befestigungselemente mit der Wandhalterung 2 verschraubt werden. Auf diese Weise kann beispielsweise der Wandwinkel 5 an der Wandhalterung 2 des erfindungsgemäßen Montagesystems 1 befestigt werden und/oder die Wandhalterung kann an einer Wand festgelegt werden. Neben den ersten Bohrungen 6, 6', 6", 6"', 6"", 6""' verfügt die Wandhalterung 2 weiter über Aufnahmelöcher 7, 7', 7", 7'", mittels derer die Dämmelemente 3, 3' an der Wandhalterung 2 vorfixiert werden können.

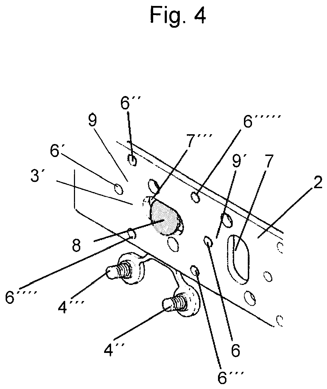

Figur 3 zeigt eine perspektivische Rückseitendarstellung des Dämmelements 3' des erfindungsgemäßen Montagesystems 1. Das Dämmelement 3' ist als Dämmkissen ausgebildet. Es besteht aus EPDM mit einer Shore-Härte von etwa 70 Shore A, wobei auch andere Materialien und/oder andere Shore-Härte verwendet werden können. Zur Vorfixierung des Dämmelements 3' verfügt dieses an seiner Rückseite über ein als pilzkopfförmige Ausstülpung 8 ausgebildetes Einsteckelement 8, das durch eines der Aufnahmelöcher 7, 7', 7", 7'" geführt werden kann und das betreffende Aufnahmeloch 7'" dann mit einer Rückhaltelippe hintergreift (vgl. Fig. 4), so dass das Dämmelement 3' dann an der Wandhalterung 2 klemmend vorfixiert ist. Das Dämmelement 3' kann aus dem Aufnahmeloch 7'" wieder entfernt werden und in ein anderes, beispielsweise in das Aufnahmeloch 7, eingeklemmt werden, so dass diese klemmende Vorfixierung reversibel ausgeführt ist. Aufgrund der im Wesentlichen kreisrunden Geometrie der Ausstülpung 8 ist das Dämmelement 3' in dem Aufnahmeloch 7'" drehbar vorfixiert. Dadurch können zwei Durchgangslöcher 9, 9' des Dämmelements 3 derart ausgerichtet werden, dass diese mit einem Paar erster Bohrungen 6, 6' der Wandhalterung 2 zur Deckung kommen. Über dünne Stege des Dämmelements 3' sind zwei Befestigungselemente 4", 4'" mit dem Dämmelement 3' verbunden. Im Bedarfsfall kann der Installateur die Befestigungselemente 4", 4'" von dem Dämmelement 3 abreißen. Dabei bleiben Abschnitte des Dämmelements 3' mit dem jeweiligen Befestigungselement 4", 4'" verbunden. Diese Abschnitte des Dämmelements 3' fungieren nach der Befestigung des Wandwinkels 5 an der Wandhalterung 2 als Dämmung zwischen dem Wandwinkel 5 und dem jeweiligen Befestigungselement 4", 4"', wobei das Dämmelement 3' zwischen dem Wandwinkel 5 und der Wandhalterung 2 angeordnet ist.

Der Wandwinkel 5 umfasst eine Wandscheibe 10 mit zwei Durchgangsbohrungen 11, 11'. Durch die Durchgangsbohrungen 11, 11' sind im montierten Zustand des erfindungsgemäßen Montagesystems 1 die Befestigungselemente 4", 4'" geführt, die dann in die ersten Bohrungen 6, 6' der Wandhalterung 2 eingeführt sind und dadurch den Wandwinkel 5 an der Wandhalterung 2 festlegen. Weiter weist der Wandwinkel 5 einen Rohrverbindungsabschnitt 12 zum Anschluss einer Rohrleitung sowie eine Gewindeöffnung 13 auf, in die beispielsweise ein Wasserhahn oder ähnliches eingeschraubt werden kann.

Zur Montage des Wandhalters 5 an einer Wand wird das erfindungsgemäße Montagesystem 1 an der Baustelle seiner Verpackung entnommen. Daraufhin wird die Wandhalterung 2 zunächst vorzugsweise mittels Schrauben in der gewünschten Position an der Wand befestigt. Das Dämmelement 3' ist im Auslieferungszustand des erfindungsgemäßen Montagesystems 1 an der Wandhalterung 2 vorfixiert, indem das als pilzkopfförmige Ausstülpung 8 ausgebildete Einsteckelement 8 durch das Aufnahmeloch 7" der Wandhalterung 2 gesteckt ist. Soll das Dämmelement 3' in ein anderes Aufnahmeloch 7, 7' eingesteckt werden, um eine andere Position auf der Wandhalterung 2 einzunehmen, wird das Dämmelement 3' zunächst aus dem Aufnahmeloch 7" entnommen und durch Einstecken der pilzkopfförmigen Ausstülpung 8 in eines der anderen Aufnahmelöcher 7, 7' an der Wandhalterung 2 vorfixiert. Danach kann das Dämmelement 3 im Bedarfsfall durch Drehen derart ausgerichtet, dass die Durchgangslöcher 9, 9' des Dämmelements 3 mit einem Paar erster Bohrungen 6, 6' der Wandhalterung 2 zur Deckung kommen. Dann wird der Wandwinkel 5 so auf das Dämmelement 3 aufgesetzt, dass die Durchgangsbohrungen 11, 11' des Wandwinkels 5 über den Durchgangslöchern 9, 9' des Dämmelements 3 liegen. Daraufhin werden die als Schrauben ausgebildeten Befestigungselemente 4", 4'" von dem Dämmelement abgerissen und in die Durchgangsbohrungen 11, 11' des Wandwinkels 5 eingedreht, bis die Befestigungselemente 4", 4"' fest in den ersten Bohrungen 6, 6' der Wandhalterung 2 sitzen. Das Dämmelement 3 ist dann dämmend zwischen der Wandhalterung 2 und dem Wandwinkel 5 angeordnet.

Die vorliegende Erfindung wurde exemplarisch unter Bezugnahme auf die in den Figuren gezeigte Ausführungsform des erfindungsgemäßen Montagesystems im Detail erläutert. Es versteht sich, dass die vorliegende Erfindung nicht auf die gezeigte Ausführungsform beschränkt ist, sondern sich der Umfang der vorliegenden Erfindung aus den beigefügten Ansprüchen ergibt.

## Patentansprüche

1. Montagesystem (1) zur Befestigung eines Wandwinkels (5) einer fluidführenden Installation an einer Wand, umfassend:
eine Wandhalterung (2), die erste Bohrungen (6, 6', 6", 6"', 6"", 6'"") zur Aufnahme von Befestigungselementen (4, 4', 4", 4"') aufweist, wobei die Wandhalterung (2) weiter Aufnahmelöcher (7, 7', 7", 7"') zur Vorfixierung eines Dämmelements (3, 3') an der Wandhalterung (2) aufweist;
mindestens einen Wandwinkel (5), der Durchgangsbohrungen (11, 11') zur Durchführung der Befestigungselemente (4, 4', 4", 4'") aufweist;
mindestens ein Dämmelement (3, 3') zur Anordnung zwischen der Wandhalterung (2) und dem Wandwinkel (5), wobei das Dämmelement (3, 3') mindestens ein Einsteckelement (8) zur steckenden Vorfixierung an der Wandhalterung (2) aufweist;
Befestigungselemente (4, 4', 4", 4"') zur Befestigung des Wandwinkels (5) an der Wandhalterung (2);
**dadurch gekennzeichnet, dass**
die Befestigungselemente (4, 4', 4", 4"') im Auslieferungszustand des Montagesystems (1) mit dem Dämmelement (3, 3') verbunden sind, wobei die Befestigungselemente (4, 4', 4", 4"') unter Abtrennung eines Abschnitts des Dämmelements (3, 3') vom Dämmelement (3, 3') abtrennbar sind.

2. Montagesystem (1) nach Anspruch 1, **dadurch gekennzeichnet, dass** das Einsteckelement (8) als eine Ausstülpung (8) auf einer Seite des Dämmelements (3, 3') ausgebildet ist.

3. Montagesystem (1) nach Anspruch 2, **dadurch gekennzeichnet, dass** die Ausstülpung (8) auf einer Seite des Dämmelements (3, 3') pilzkopfförmig mit Rückhaltelippe ausgebildet ist.

4. Montagesystem (1) nach einem der Ansprüche 1 bis 3, **dadurch gekennzeichnet, dass** die steckende Vorfixierung des Dämmelements (3, 3') an der Wandhalterung (2) reversibel ausgestaltet ist.

5. Montagesystem (1) nach einem der Ansprüche 1 bis 4, **dadurch gekennzeichnet, dass** das Dämmelement (3, 3') mittels des Einsteckelements (8) in der Wandhalterung (2) drehbar ist.

## Claims

1. Mounting system (1) for attaching a wall angle (5) of a fluid-conveying installation on a wall, comprising:
a wall bracket (2), which comprises first holes (6, 6', 6", 6"', 6"", 6""') for the reception of fastening elements (4, 4', 4", 4"'), wherein the wall bracket (2) further comprises receiving holes (7, 7', 7", 7"') for prefixing of an isolation element (3, 3') on the wall bracket (2),
at least one wall angle (5) which comprises through holes (11, 11') for the passage of the fastening elements (4, 4', 4", 4"');
at least one isolation element (3, 3') for arranging between the wall bracket (2) and the wall angle (5), wherein the isolation element (3, 3') comprises at least one insertion element (8) for the inserted pre-fixation on the wall bracket (2);
fastening elements (4, 4', 4", 4"') for fastening the wall angle (5) on the wall bracket (2);
**characterized in that**
the fastening elements (4, 4', 4", 4"'), in the delivery state of the mounting system (1), are connected with the isolation element (3, 3'), wherein the fastening elements (4, 4', 4", 4"') are removable by separation of a portion of the isolation element (3, 3') from the isolation element (3, 3').

2. Mounting system (1) according to claim 1, **characterized in that** the insertion element (8) is configured as a protuberance (8) on a side of the isolation element (3, 3').

3. Mounting system (1) according to claim 2, **characterized in that** the protuberance (8) is configured on a side of the isolation element (3, 3') in the form of a mushroom head with retaining lip.

4. Mounting system (1) according to any one of claims 1 to 3, **characterized in that** the inserted prefixation of the isolation element (3, 3') on the wall bracket (2) is configured to be reversible.

5. Mounting system (1) according to any one of claims 1 to 4, **characterized in that** the isolation element (3, 3') is rotatable in the wall bracket (2) by means of the insertion element (8).

## Revendications

1. Système de montage (1) pour la fixation d'une équerre murale (5) d'une installation conduisant un fluide sur un mur, comprenant :
un support mural (2) qui comporte de premiers alésages (6, 6', 6", 6"', 6"", 6""') pour recevoir des éléments de fixation (4, 4', 4", A'"), le support mural (2) présentant d'autres alésages récepteurs (7, 7', 7", 7"') pour la fixation préalable d'un élément isolant (3, 3') au support mural (2);
au moins une équerre murale (5) qui comporte des alésages traversants (11, 11') pour le guidage à travers des éléments de fixation (4, 4', 4", 4") ;
au moins un élément isolant (3, 3') pour l'agencement entre le support mural (2) et l'équerre murale (5), l'élément isolant (3, 3') comportant au moins un élément d'insertion (8) pour une fixation préalable par insertion sur le support mural (2) ;
des éléments de fixation (4, 4', 4", 4"') pour la fixation de l'équerre murale (5) sur le support mural (2) ;
**caractérisé en ce que**
les éléments de fixation (4, 4', 4", 4"') sont reliés, dans l'état à la livraison du système de montage (1), à l'élément isolant (3, 3'), les éléments de fixation (4, 4', 4", 4"') étant séparables de l'élément isolant (3, 3') en séparant une partie de l'élément isolant (3, 3').

2. Système de montage (1) selon la revendication 1, **caractérisé en ce que** l'élément d'insertion (8) est conçu comme une protubérance (8) sur un côté de l'élément isolant (3, 3').

3. Système de montage (1) selon la revendication 2, **caractérisé en ce que** la protubérance (8) sur un côté de l'élément isolant (3, 3') est conçue sous la forme d'une tête de champignon avec une lèvre de maintien.

4. Système de montage (1) selon l'une quelconque des revendications 1 à 3, **caractérisé en ce que** la fixation préalable par insertion de l'élément isolant (3, 3') sur le support mural (2) est conçue de manière réversible.

5. Système de montage (1) selon l'une quelconque des revendications 1 à 4, **caractérisé en ce que** l'élément isolant (3, 3') est pivotable dans le support mural (2) au moyen de l'élément enfichable (8)
